## Europäisches Patentamt
## European Patent Office
## Office européen des brevets

(19)

(11) Veröffentlichungsnummer: **0 117 284**
A1

(12) **EUROPÄISCHE PATENTANMELDUNG**

(21) Anmeldenummer: **83110910.3**

(22) Anmeldetag: **02.11.83**

(51) Int. Cl.³: **B 23 K 20/08**, H 01 H 1/02

(30) Priorität: **13.01.83 DE 3300930**

(71) Anmelder: **Heraeus Elektroden GmbH, Heraeusstrasse 12 - 14, D-6450 Hanau/Main (DE)**

(43) Veröffentlichungstag der Anmeldung: **05.09.84 Patentblatt 84/36**

(72) Erfinder: **Schreiber, Franz, Dr., St. Magdalena Strasse 5, D-8901 Biberbach (DE)**

(74) Vertreter: **Zwergel, Wilhelm, Heraeusstrasse 12 - 14, D-6450 Hanau / Main (DE)**

(84) Benannte Vertragsstaaten: **AT BE CH DE FR GB IT LI SE**

(54) **Apparateteile, insbesondere in Form von Scheiben oder Platten, die teilweise mit einem Auflagewerkstoff versehen sind.**

(57) Scheiben- oder plattenförmiger Grundkörper (auch Verbundkörper), sprengplattiert wenigstens in einem Randbereich (z.B. nahe dem Umfang), mit einer Auflage (oder Unterlage) aus hochwertigen metallischen Werkstoffen, die von denen des Grundkörpers verschieden und normalerweise schlecht durch Schweißen verbindbar sind.

Aus Grundkörpern werden Scheiben, Platten, Ringe Quader oder dergleichen hergestellt. Verschiedene Anwendungen.

**EP 0 117 284 A1**

0117284

Hanau, den 26. Oktober 1983
ZPL-Zw/ha


W.C. Heraeus GmbH, Hanau


Patentanmeldung


"Apparateteile, insbesondere in Form
von Ringen, die teilweise mit einem Auflagewerkstoff versehen sind"


Die Erfindung betrifft Apparateteile nach dem Oberbegriff
des Anspruch 1.

Bisher wurden plattenförmige Verbundkörper hergestellt, indem
man auf einen Grundwerkstoff eine Auflage aufbringt, und
zwar ganzflächig, und danach den größeren Teil der Gesamtfläche
entfernt und nur einen Ring am Rande stehen läßt.

Ein derartiges Herstellungsverfahren ist insbesondere dann
von Nachteil, wenn der Auflagewerkstoff aus hochwertigen
Metallen besteht, weil dieser als Verlust oder als aufzuarbeitendes Material anfällt.

Aufgabe der Erfindung ist es, Apparateteile mit einem Grundwerkstoff und einer Auflage, gegebenenfalls auch mehrschichtig,
mittels Zwischenschicht so zu verbinden, daß Verluste an
teuren Metallen beim Auflagewerkstoff oder Aufarbeitungen
vermieden werden.

Gelöst wird dies durch die Merkmale des Anspruchs 1 bzw. 3.

- 2 -

Weitere Ausgestaltungen bzw. Verwendungen sind den übrigen
Ansprüchen sowie der Beschreibung und Zeichnung von Ausführungsbeispielen zu entnehmen.

Zur Erfindung gehören auch alle Kombinationen der beschriebenen, dargestellten und beanspruchten Merkmale sowohl untereinander als auch mit an sich bekannten Merkmalen.

Die wesentlichsten Vorteile der Erfindung sind:
Einfache Herstellung, geringer Sondermetallverbrauch, neue
Anwendungen.

Ausführungsbeispiele sind den beigefügten Zeichnungen zu
entnehmen. Es zeigen:

Figur 1a bis 1c die Herstellung eines kreisförmigen, plattenartigen Apparateteils;
Figur 2a bis 2d die Herstellung eines ringförmigen Apparateteils;
Figur 3a und 3b mehreckige Verbundkörper (hier Quadrat) mit
        kreisförmiger oder quadratischer Ausnehmung;

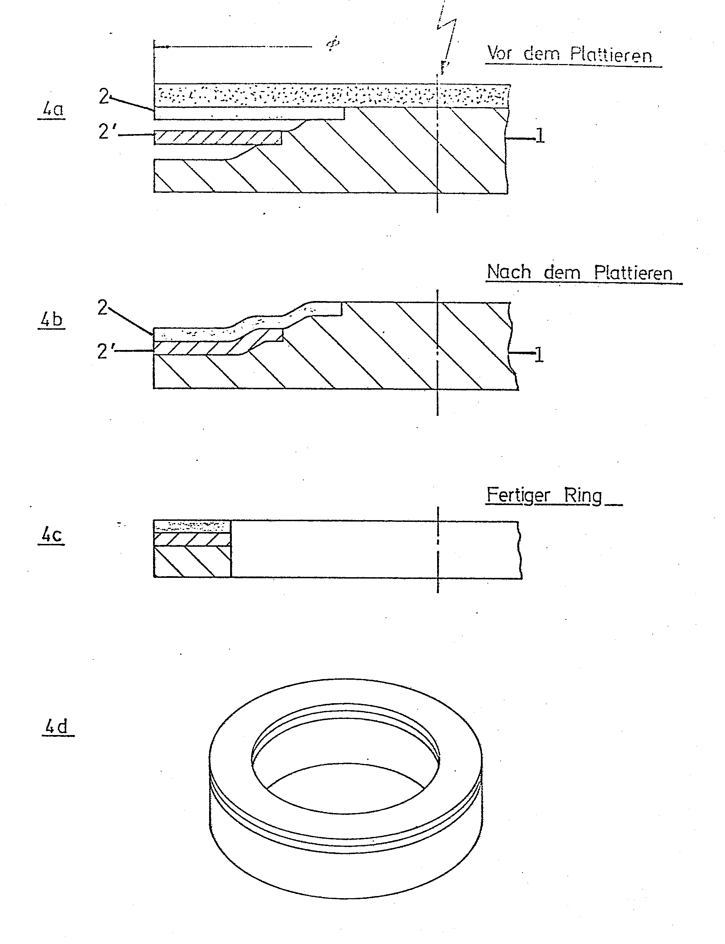

Figur 4a bis 4d einen Mehrschicht-Verbundstoff.

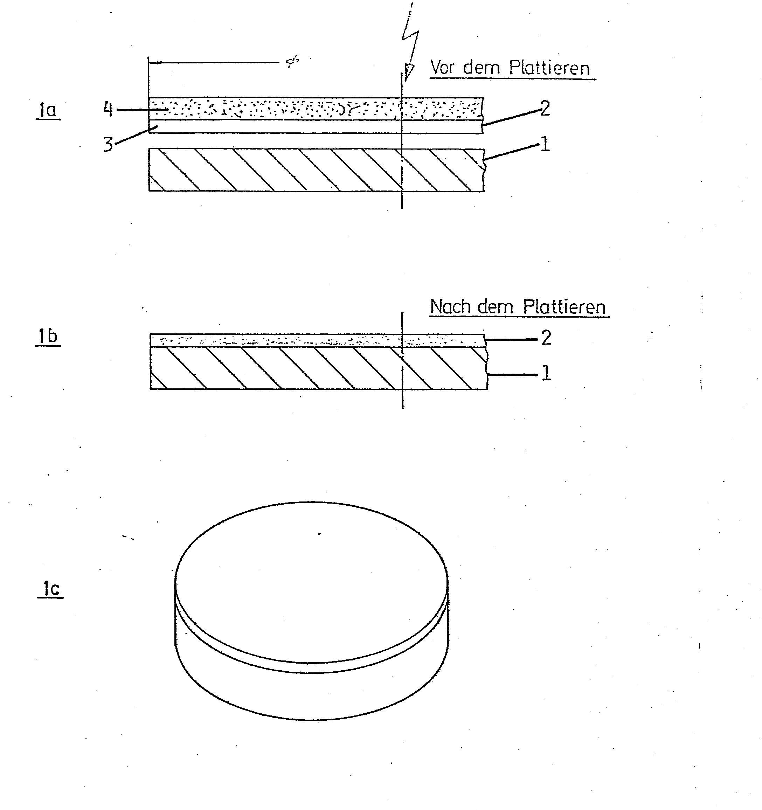

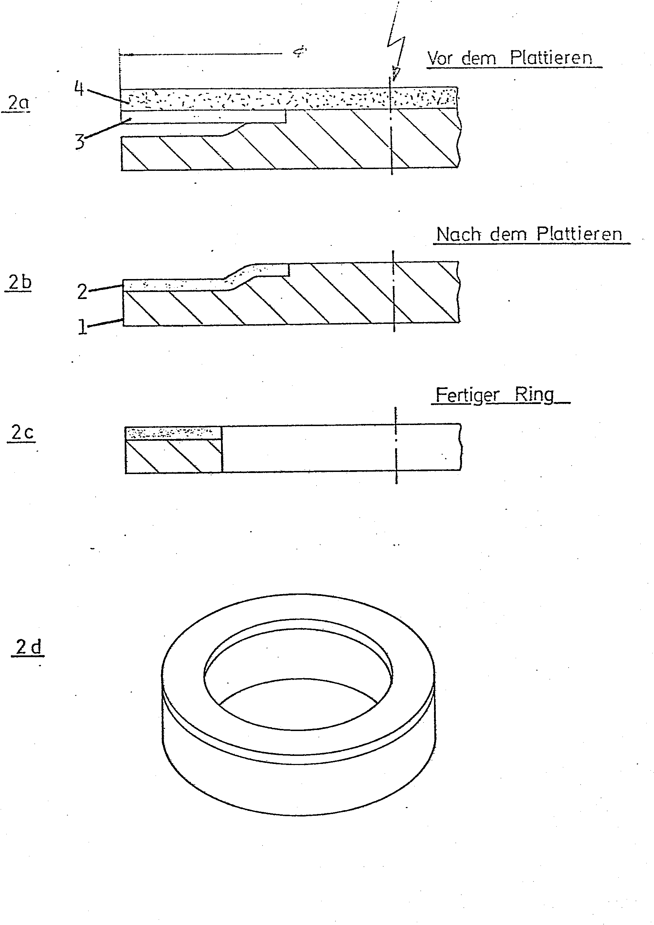

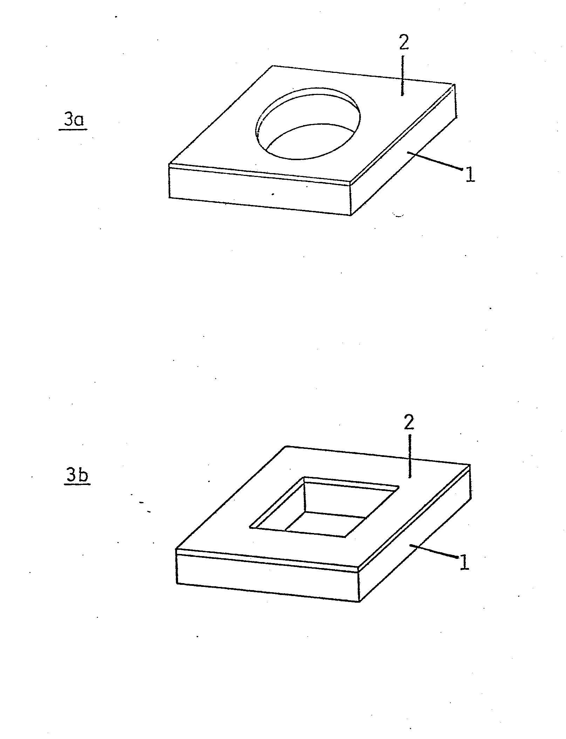

Wie Figur 1 zeigt, ist eine Grundplatte, bevorzugt eine ebene
Grundplatte, in Form einer kreisrunden Scheibe oder nach dem
Entfernen (Ausstanzen) des nicht gewünschten Kern- oder Zentralbereichs als Ring (Fig. 2) oder Quader (Fig.3) vorgesehen,
auf die der Auflagewerkstoff aufgebracht wird durch Sprengplattieren. Der Werkstoff und das Sprengplattierverfahren sind
Gegenstand der Patentanmeldung P 32 38 776.8. Das dort beschriebene Verfahren und die Werkstoffe sind hier gleicherweise anwendbar. Ein vorgefertigtes Apparateteil in Form einer Scheibe
oder Platte aus z.B. 0,1 mm bis ca. 1 mm starkem Tantalblech
wird belegt und lediglich linienhaft an den Grundwerkstoff

- 3 -

geheftet. Das linienhafte Heften erfolgt durch eine lokale Explosionsschweißung. An den Stellen, wo die Haftung zu erfolgen hat, wird zuvor in das Tantalblech eine Sicke als Hohlraum eingebracht, so daß zwischen Grundwerkstoff und Tantalblech ein Abstand von mindestens der Dicke des Auflagematerials entsteht. Der Grundwerkstoff 1 ist z. B. Stahl, Edelstahl und hochlegierte Werkstoffe. Der Auflagewerkstoff 2 weist im Bereich 3 die genannte Sicke auf. Über der Sicke befindet sich eine Sprengschnur bzw. ein -band 4, wie z. B. unter dem Namen "Dynacord" mit rundem Querschnitt im Bereich von ca. 50 mm Durchmesser erhältlich, z. B. mit einer Menge von 12 mg Explosivstoff pro mm Schnurlänge. Um das dünne Tantalblech vor Beschädigungen zu schützen, die durch eine zu hohe Druckeinwirkung entstehen können, ist z. B. das Tantalblech 2 durch eine nichtmetallische Abdeckung geschützt (nicht dargestellt). Nach Zündung der Sprengschnur bei einer Sprenggeschwindigkeit zwischen etwa 2.000 bis 9.000 m/sec., bevorzugt 5,5 bis 7,5 · $10^3$ m/sec., ist das Auflagematerial 2 in dem Bereich, an dem sich die Sicke 3 befand, eingeebnet und mit dem Grundwerkstoff 1 verschweißt.

Die wirtschaftliche Bedeutung dieser Herstellung liegt darin, daß für die Auflagen nicht Bleche des Auflagenmaterials in derselben Größenordnung bereitgestellt werden müssen. Vielmehr ist es möglich, eine Anzahl dünner Bleche miteinander zu verschweißen und mit dem Behälter linienhaft zu verbinden, wobei die Sprengschnur oder -schnüre entweder punktförmig im Zentrum angeordnet sind oder von dort ausgehen in den Randbereich am Umfang der Kreis- oder Ringfläche oder des Quaders.

In der Fertigung von Blechen des Auflagewerkstoffes fällt dieses in beschränkten Breiten als gewalztes Band an. Das Auskleiden großer Teile wird dadurch gelöst, daß ein gewalztes

Blech (z. B. Tantal-Blech von 200 mm Breite, in einer Dicke
zwischen 0,05 und 10 mm) aufgelegt wird, das am Rand mit
einer Sicke versehen ist und mit einer über der Sicke angebrachten Sprengschnur an den Grundkörper angeschweißt wird. Auf
diese Weise ist es möglich, einen Grundkörper auf wesentlich
wirtschaftlichere Weise mit einem Auflagematerial auszukleiden
und gleichzeitig linienhaft zu verschweißen.

Sehr oft ist es im chemischen Apparatebau (Plattenwärmetauscher)
und in der Energiewirtschaft (z. B. zur Nutzung der Solarenergie)
erforderlich, daß Kühl- oder Heizkanäle für den Wärmetausch
oder -transport angebracht werden. Dies wird anhand der geschilderten Linienschweißung dadurch durchgeführt, daß z.B.
in einem Teil ein Auflageblech mit Hilfe einer Schweißnaht
von der geschilderten Art verbunden wird und anschließend
der nicht verschweißte Raum zwischen Auflageblech und Grundwerkstoff mit einem Druckmedium beaufschlagt wird, so daß
das Auflageblech zwischen den Schweißnähten in an sich bekannter Weise aufgebläht wird, wodurch die gewünschten Kanäle
entstehen. So können z. B. spiralige, mäanderförmige Kühlkanäle
in zylindrischen Teilen von Behältern geformt werden. Werden
mäanderförmige Kanäle in ebenen Blechen auf diese Weise erzeugt, ist das geschilderte Verfahren besonders gut geeignet,
Solarabsorberflächen auf billige Weise herzustellen (z.B.
aus Aluminium). In Ergänzung zu den aufblasbaren Kanälen
sind auch vorgeformte Kanäle anwendbar.

Es besteht die Möglichkeit, verschiedenartigste Teile für
den Apparatebau zu plattieren, wie z. B. Rohrhalterungen,
Kessel- bzw. Behälterböden u.v.a. Ebenso besteht die Möglichkeit,
Reparaturplattierung an losen bzw. fest verkleideten Apparaten
durchzuführen. Hierzu eignet sich besonders die Ausführung
mit punktförmiger Sprengstoffanbringung, wenn die Reparatur-

- 5 -

- 5 -

stelle sehr klein ist. Kombinationen, Abwandlungen oder Ergänzungen der Ausführungsbeispiele untereinander als auch
mit bekannten Merkmalen fallen selbstverständlich in den
Rahmen der Erfindung.

Die Anwendungen der Erfindung sind vielfältig, wie in den
Ansprüchen 5 und 6 sowie in dieser Beschreibung erwähnt,
ohne hierauf beschränkt zu sein.

Für die Zwecke, die in Anspruch 5 erwähnt sind, eignet sich
besonders gut eine Ausführung nach Fig. 2 oder Fig. 3 ebenso
wie für Elektroden und Halterungen, z. B. von Wärmetauscherrohren in Behältern.

Für die Zwecke, die in Anspruch 6 erwähnt sind, eignet sich
besonders gut die Ausführung nach Fig. 1; ebenso als Behälterboden (auch gewölbt).

0117284

Hanau, den 26. Oktober 1983
ZPL-Zv/ha

W.C. Heraeus GmbH, Hanau

Patentanmeldung

"Apparateteile, insbesondere in Form
von Ringen, die teilweise mit einem Auflage
werkstoff versehen sind"

## Patentansprüche

1. Apparateteile, insbesondere in Form von Ringen, die wenigstens teilweise mit einem Auflagewerkstoff versehen sind,
   der Grundwerkstoff oder die Grundplatte aus Stahl, insbesondere Edelstahl und/oder metallischen Werkstoffen, wie
   Titan, Niob, Tantal, Zirkonium, Nickel, Molybdän, Platin,
   Iridium, Palladium, Rhodium, Aluminium, Gold, Silber und/
   oder deren Legierungen und/oder Verbindungen oder Zusätzen
   hieraus besteht und der Auflagewerkstoff ebenfalls aus
   einem Werkstoff dieser Gruppe in Form eines dünnen Bleches
   bzw. einer metallischen Folie besteht, dadurch gekennzeichnet, daß die Werkstoffe durch Sprengplattieren im
   wesentlichen nur im Bereich des Randes oder nahe dem äußeren
   Rand der Grundplatte oder -scheibe ringförmig verbunden
   sind.

2. Apparateteile nach Anspruch 1, dadurch gekennzeichnet,
   daß die im wesentlichen ebene, kreisförmige Grundplatte
   aus Grundwerkstoff mit einer ringförmigen Auflage aus
   Auflagewerkstoff besteht und durch Sprengplattieren verbunden
   ist. (Figur 2)

- 2 -

PA-365

3. Verfahren zum Herstellen von Apparateteilen nach Anspruch 1 oder 2, dadurch gekennzeichnet, daß zwischen Grundwerkstoff und Auflagewerkstoff vor dem Sprengplattieren eine etwa ringförmige Ausnehmung (5), vom Außenumfang ausgehend, hergstellt wird, in die eine bevorzugt kreislinienförmig angeordnete Sprengschnur eingelegt und danach der Verbund durch Sprengplattieren hergestellt wird. (Figur 1a)

4. Verfahren nach Anspruch 3, gekennzeichnet durch eine vom Zentrum her erfolgende oder von dort über Sprengschnüre eingeleitete Zündung. (Figur 1c)

5. Verwendung der nach Anspruch 3 hergestellten Materialverbundkörper für ebene, mehrschichtige Verbundkörper für elektrotechnische Zwecke, wie Heizplatten relativ großer Fläche oder dergleichen mit äußeren im wesentlichen ringförmigen Kontakten bzw. Kontaktbereichen und/oder -trägern.

6. Verwendung von nach dem Verfahren gemäß Anspruch 3 hergestellten Teilen für ebene, flächenhafte Teile des chemischen Apparatebaus, insbesondere ringförmige Wärmetauscher, wie Böden, Trag- oder Halteringe.

1/4

0117284

1a    4
      3

2
1

Vor dem Plattieren

1b

Nach dem Plattieren
2
1

1c

0117284

2a — Vor dem Plattieren

4
3

2b — Nach dem Plattieren

2
1

2c — Fertiger Ring

2d

0117284

3a

2

1

3b

2

1

0117284

4/4

**Vor dem Plattieren**

4a

2

2'

1

**Nach dem Plattieren**

4b

2

2'

1

**Fertiger Ring**

4c

4d

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| X | DE-B-2 455 608 (KRUPP) * Spalte 1, Zeilen 4-34; Spalte 3, Zeilen 32-34; Spalte 5, Zeilen 7-19 * | 1-4 | B 23 K 20/08<br>H 01 H 1/02 |
| Y | | 5 | |
| Y | US-A-2 187 378 (MALLORY) * Seite 2 * | 5 | |
| A | DE-B-2 158 655 (DÜRRWÄCHTER) * Spalte 4 * | 1 | |
| A | PATENTS ABSTRACTS OF JAPAN, Band 6, Nr. 263 (M-181)[1141], 22. Dezember 1982 & JP - A - 57 156 883 (ASAHI KASEI KOGYO K.K.) 28.09.1982 | 1 | |
| | ----- | | **RECHERCHIERTE SACHGEBIETE (Int. Cl. ³)**<br><br>B 23 K<br>H 01 H |

Der vorliegende Recherchenbericht wurde für alle Patentansprüche erstellt.

| Recherchenort<br>DEN HAAG | Abschlußdatum der Recherche<br>11-05-1984 | Prüfer<br>HOORNAERT W. |
|---|---|---|